# EUROPÄISCHE PATENTSCHRIFT

(11) **EP 0 752 945 B1**
(45) Veröffentlichungstag und Bekanntmachung des Hinweises auf die Patenterteilung: **10.06.1998**
(21) Anmeldenummer: 95913045.1
(22) Anmeldetag: 23.03.1995
(51) Int. Cl.: B62D 5/097

(54) **HYDRAULISCHE LENKEINRICHTUNG MIT LASTSIGNAL**
HYDRAULIC STEERING UNIT WITH LOAD SIGNAL
MECANISME DE DIRECTION HYDRAULIQUE A SIGNAL DE CHARGE

(30) Priorität: 28.03.1994 DE 4410693
(43) Veröffentlichungstag der Anmeldung: 15.01.1997
(73) Patentinhaber: HYDRAULIK NORD GMBH, 19370 Parchim (DE)
(72) Erfinder: BERGMANN, Erhard, D-19079 Mirow (DE); SCHILDMANN, Manfred, D-19370 Parchim (DE); VOSS, Gerhard, D-19370 Parchim (DE)
(74) Vertreter: Jaap, Reinhard
(86) Internationale Anmeldenummer: DE9500393
(87) Internationale Veröffentlichungsnummer: WO9526292

(56) Entgegenhaltungen:
- GB-A- 2 014 096
- GB-A- 2 034 646

## Beschreibung

Die Erfindung bezieht sich auf eine hydraulische Lenkeinrichtung nach dem Oberbegriff des Anspruchs 1. Solche Lenkeinrichtungen kommen in mobilen Anlagen zum Einsatz, die aus einem Lenkkreislauf und aus einem Arbeitskreislauf bestehen und die beide von einer gemeinsamen Pumpe versorgt werden, wobei der Lenkkreislauf Priorität besitzt.

Solche Anlagen bestehen in der Hauptsache aus einer gemeinsamen Versorgungspumpe und einem gemeinsamen Stromteilventil, sowie einer Lenkeinrichtung und einem Lenkzylinder einerseits und einem Arbeitskreislauf andererseits. Das Stromteilventil ist federbelastet ausgeführt und erhält sein Steuersignal als sogenanntes Lastsignal aus der hydraulischen Lenkeinrichtung. Nach diesem Lastsignal reguliert das Stromteilventil seine Durchflußquerschnitte in der Art, daß der Lenkkreislauf vorrangig und bedarfsgerecht und der Arbeitskreislauf mit dem überschüssigen Drucköl versorgt werden. Es ist bekannt, das Lastsignal statisch oder dynamisch aufzubereiten. Auf Grund der hohen Reaktionsfähigkeit eines dynamischen Lastsignales setzt sich diese Aufbereitungsart in der Praxis verstärkt durch.

So ist beispielsweise eine Lenkeinrichtung mit einem dynamischen Lastsignal aus der EP 0 096 963 bekannt. Diese Lenkeinrichtung besitzt einen Lastsignalpfad, der von der Hauptstromleitung von der Lenkeinrichtung abzweigt, einerseits zur federbelasteten Seite des Stromteilventiles und andererseits zu einem gesonderten Anschluß der Lenkeinrichtung führt, innerhalb der Lenkeinrichtung nach der ersten verstellbaren Drossel wieder in der Hauptstromleitung mündet und von dort gleichzeitig zum Rücklauf führt. In dem zum Rücklauf führenden Teil des Lastsignalpfades befindet sich eine von der Lenkeinrichtung betätigbare und sich zur ersten verstellbaren Drossel umgekehrt proportional verhaltende Verstelldrossel. Diese Lenkeinrichtung besitzt den Nachteil, daß zur Aufrechterhaltung einer vorzugsweisen und bedarfsgerechten Versorgung des Lenkaggregates auch bei hohen Lenkdrehzahlen und damit hohen Durchflußmengen eine Regelfeder mit einer relativ hohen Federsteife erforderlich ist. In der Neutralstellung, also bei nicht betätigter Lenkeinrichtung muß aber stets gegen diese starke Regelfeder gearbeitet werden, um den Arbeitskreislauf zu versorgen. Das bedingt hohe Energie- und Leistungsverluste der Hydraulikanlage.

In der GB-A-2014096 ist nun eine Lenkeinrichtung nach dem Oberbegriff des Anspruchs 1 beschrieben, die diesen Nachteil nicht aufweist. Dazu ist diese Lenkeinrichtung mit einer Nebenleitung ausgerüstet, die von der Hauptleitung stromabwärts der verstellbaren Eingangsdrossel abzweigt und über eine Lastsignaldrossel zum Ablaufanschluß führt. In dieser Nebenleitung befinden sich auch zwei verstellbare Drosseln in paralleler Anordnung. Beide Drosseln sind in der Neutralstellung geschlossen und öffnen mit der verstellbaren Eingangsdrossel gleichsinnig. Eine der beiden Drosseln schließt bei einem bestimmten Auslenkwinkel, während die andere Drossel geöffnet bleibt.
Da beide Drosseln über den gesamten Auslenkbereich synchron arbeiten, müssen die Öffnungscharakteristiken beider Drosseln genauestens aufeinander abgestimmt sein. Diese Fertigungsanforderungen sind daher sehr hoch und kostenintensiv und unter Serienbedingungen nicht realisierbar, sodaß es zu undefinierbaren Lenkungsverhalten der einzelnen Lenkeinrichtungen kommt. Das ist bei diesen Geräten nicht vertretbar.

Es besteht die Aufgabe, bei Lenkeinrichtungen der vorliegenden Art das Druckniveau des Lastsignals bedarfsgerecht zu erhöhen.

Diese Aufgabe wird durch die Merkmale des Anspruchs 1 gelöst.

Zweckdienliche Ausgestaltungen der Erfindung ergeben sich aus den Merkmalen der Unteransprüche 2 bis 5.

Die erfindungsgemäße Lenkeinrichtung trägt zur Verbesserung der Energiebilanz der gattungsgemäßen Hydraulikanlagen bei. Mit der bedarfsgerechten Erhöhung der Druckdifferenz zwischen beiden auf das Stromteilventil einwirkenden Drucksignale zugunsten des Lastsignals wird der Einsatz einer schwächeren, das Lastsignal unterstützenden Druckfeder möglich. Dadurch kommt ein wesentlicher Teil der Leistung der Versorgungspumpe der Arbeitshydraulik zugute, die bislang zum Umschalten des Stromteilventiles benötigt wurde.

Die Erfindung soll nachstehend an Hand eines Ausführungsbeispieles näher erläutert werden.

Dazu zeigen:
- Fig. 1:: einen Lenkungs- und einen Arbeitskreislauf mit gemeinsamer Versorgungspumpe,
- Fig. 2:: einen Schnitt durch eine Lenkeinrichtung.
- Fig. 3:: eine Abwicklung des Steuerventiles der Lenkeinrichtung in Neutralstellung,
- Fig. 4:: eine Abwicklung des Steuerventiles der Lenkeinrichtung mit geringer Auslenkung.
- Fig. 5:: eine Abwicklung des Steuerventiles der Lenkeinrichtung mit größter Auslenkung und
- Fig. 6:: eine Abwicklung des Steuerventiles der Lenkeinrichtung in Neutralstellung mit einer anderen Drosselausführung.

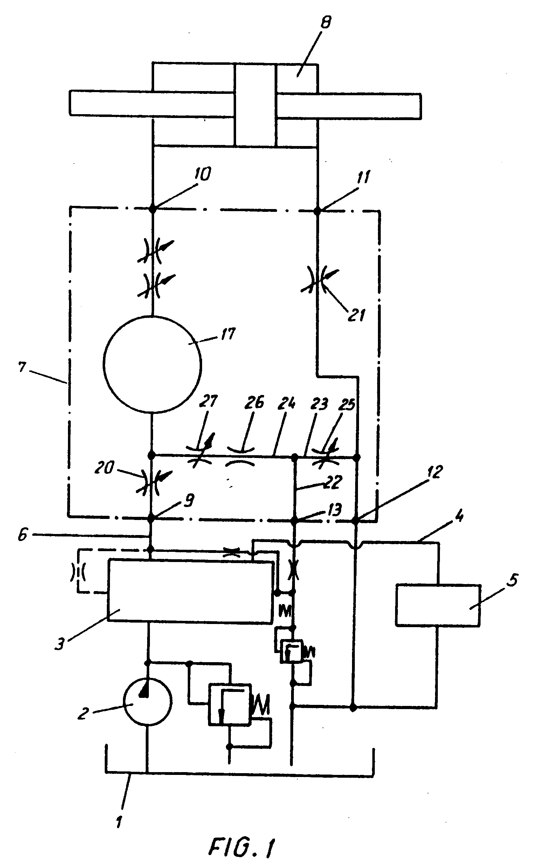

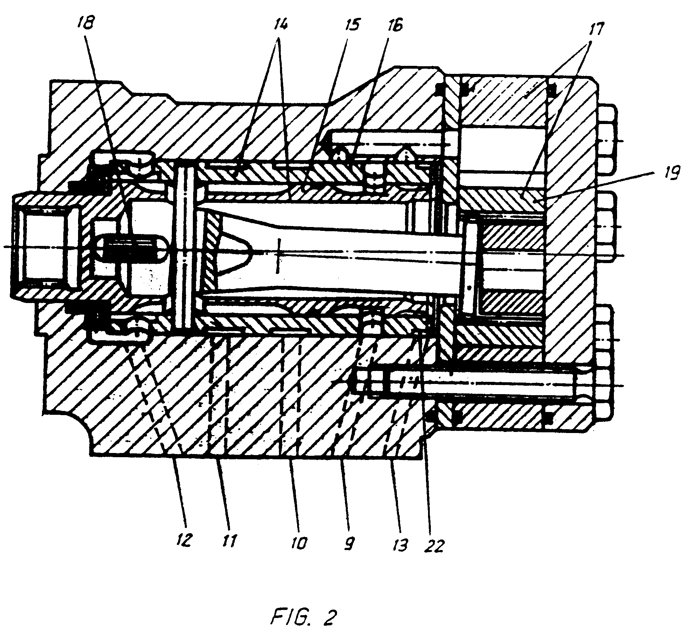

Der kreislauf nach der Fig. 1 setzt sich aus einem Lenkkreislauf und einem Arbeitskreislauf zusammen und besteht aus gemeinsamen Elementen, einem Tank 1, einer konstant fördernden Versorgungspumpe 2 und einem Stromteilventil 3. Vom Stromteilventil 3 zweigt eine Zulaufleitung 4 für eine Arbeitshydraulik 5 und eine Zulaufleitung 6 für eine Lenkeinrichtung 7 ab. Ein Lenkzylinder 8 ist der Lenkeinrichtung 7 nachgeordnet. Die Lenkeinrichtung 7 besitzt einen, mit dem Stromteilventil 3 verbundenen Zulaufanschluß 9, zwei Zylinderanschlüsse 10 und 11 für den Lenkzylinder 8, einen, mit dem Tank 1 verbundenen Rücklaufanschluß 12 sowie einen Lastsignalanschluß 13, der über Drosseln verbindung mit der federbelasteten Seite des Stromteilventiles 3 und der Zulaufleitung 6 zur Lenkeinrichtung 7 hat.
Wie auch die Fig. 2 zeigt, besteht die Lenkeinrichtung 7 in der Hauptsache aus einer Steuereinheit 14 mit einem inneren Steuerkolben 15 und einer äußeren Steuerhülse 16 und einer nach dem Gerotorprinzip arbeitenden Verdrängereinheit 17, der Steuerkolben 15 und die Steuerhülse 16 besitzen miteinander und mit der Verdrängereinheit 17 kommunizierende axiale und radiale Kanäle und sind beide gegen die Kraft einer Feder 18 in einem begrenzten Winkel zueinander drehbar.

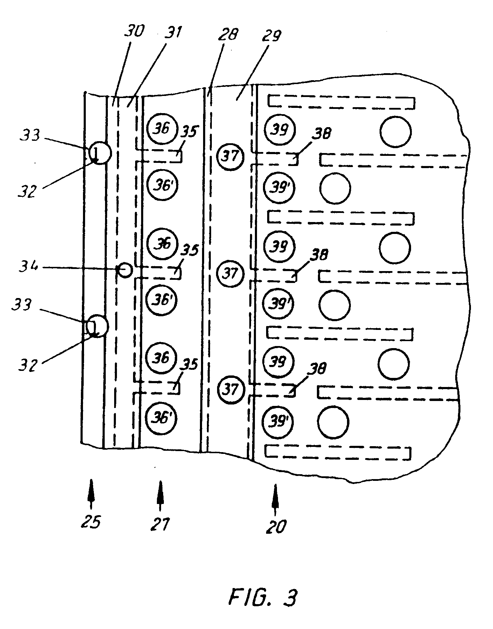

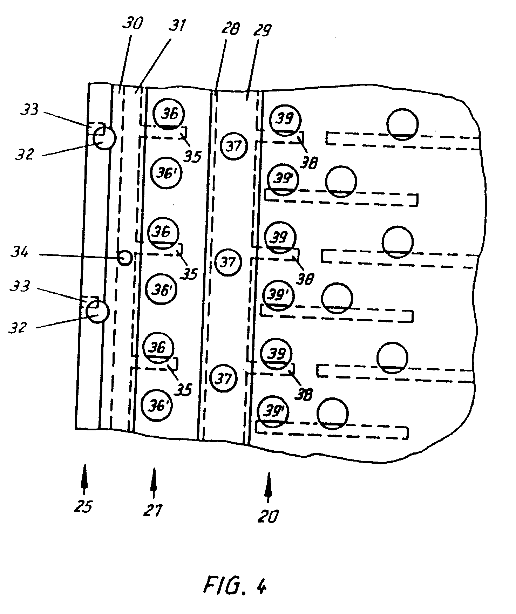

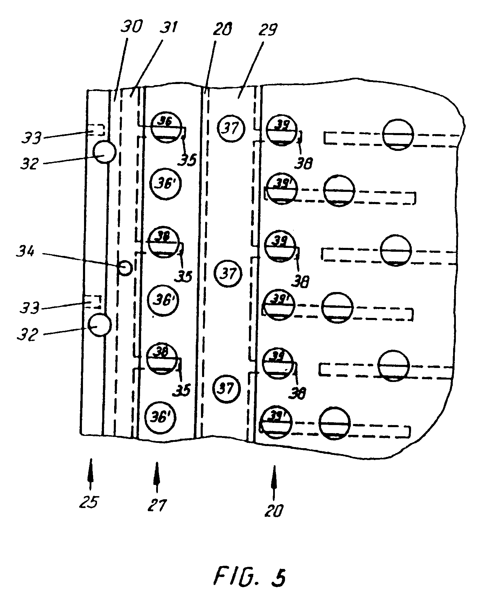

Die Steuerhülse 16 ist mechanisch mit dem Rotor 19 der Verdrängereinheit 17 verbunden.
In der Steuereinheit 14 befinden sich in der Hauptleitung stromaufwärts vor der Verdrängereinheit 17 eine verstellbare Eingangsdrossel 20 und stromabwärts des Lenkzylinders 8 eine verstellbare Ausgangsdrossel 21. Weiterhin befindet sich in der Steuereinheit 14 ein Strömungspfad 22 für das Lastsignal, der seinen Anfang im Lastsignalanschluß 13 nimmt und der sich in einen ersten Pfad 23 mit Verbindung zum Rücklaufanschluß 12 und in einen zweiten Pfad 24 mit Verbindung zur Hauptleitung stromabwärts der verstellbaren Eingangsdrossel 20 aufteilt. Im ersten Pfad 23 ist eine erste verstellbare Lastsignaldrossel 25 und im zweiten Pfad 24 in Reihe eine Drossel 26 und eine zweite verstellbare Lastsignaldrossel 27 angeordnet. Die Drossel 26 kann als Konstantdrossel oder als Verstelldrossel ausgeführt sein. Die verstellbaren Drosseln 20, 25 und 27 sind hinsichtlich ihrer Schließcharakteristik so ausgelegt, daß die erste verstellbare Lastsignaldrossel 25 und die verstellbare Eingangsdrossel 20 entgegengerichtet schließen und die zweite verstellbare Lastsignaldrossel 27 und die verstellbare Eingangsdrossel 20 gleichgerichtet schließen. Je nach Anwendungsfall ist es konstruktiv möglich, die Öffnungs- bzw. Schließbewegung der genannten verstellbaren Drosseln zeitversetzt zu realisieren.
Die konstruktive Gestaltung der Drosseln 20, 25, 26 und 27 ist aus den Fig. 3 bis 6 erkennbar. Dabei ist die Steuerhülse 16 sichtbar und der darunterliegende Steuerkolben 15 unsichtbar dargestellt.

Ein Ringkanal 28 der Steuerhülse 16 und ein Ringkanal 29 des Steuerkolbens 15 für den Eingangsstrom sowie ein Ringkanal 30 der Steuerhülse 16 und ein Ringkanal 31 des Steuerkolbens 15 für den Lastsignalstrom befinden sich jeweils in Überdeckung. Radiale Bohrungen 32 der Steuerhülse 16 mit Verbindung zum Ringkanal 30 und entsprechend angeordnete Schlitze 33 im Steuerkolben 15 mit Verbindung zum Innenraum der Steuereinheit 14 bilden die erste verstellbare Lastsignaldrossel 25. Eine oder mehrere radiale Bohrungen 34 mit definiertem Querschnitt im Bereich des Ringkanals 30 der Steuerhülse 16 mit Verbindung zum Ringkanal 31 des Steuerkolbens 15 bilden die Drossel 26 mit konstantem Querschnitt. Von diesem Ringkanal 31 des Steuerkolbens 15 verlaufen mehrere, verteilt angeordnete axiale Schlitze 35 mit begrenzter Länge, die zu in ihrem Längenbereich zu beiden Seiten angeordneten radialen Bohrungen 36 und 36' in negativer Überdeckung stehen. Die Schlitze 35 und die Bohrungen 36 oder 36' bilden die zweite verstellbare Lastsignaldrossel 27. Der Ringkanal 28 der Steuerhülse 16 für den Eingangsstrom steht über mehrere gleichmäßig am Umfang verteilt angeordnete radiale Bohrungen 37 mit dem Ringkanal 29 des Steuerkolbens 15 in Verbindung. Dieser Ringkanal 29 besitzt wiederum axiale Schlitze 38 mit begrenzter Länge. Auch diese Schlitze 38 stehen zu beidseitig angeordneten radialen Bohrungen 39 und 39' der Steuerhülse 16 in negativer Überdeckung und bilden zusammen die verstellbare Eingangsdrossel 20.

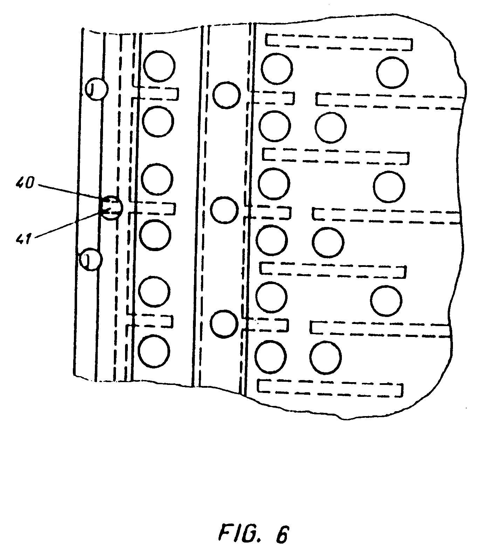

Die Fig. 6 zeigt eine besondere Ausführungsform, in der die Drossel 26 ebenfalls verstellbar ausgeführt ist.

Dazu ist im Ringkanal 30 der Steuerhülse 16 eine radiale Bohrung 40 in der Art angeordnet, daß sie in der Neutralstellung der Steuereinheit 14 in positiver Überdeckung mit einem axialen Schlitz 41 des Steuerkolbens 15 steht. Dieser Schlitz 41 ist mit dem Ringkanal 31 des Steuerkolbens 15 verbunden.

In der Neutralstellung der Lenkeinheit 14 ist die verstellbare Eingangsdrossel 20 geschlossen, da die axialen Schlitze 38 des Steuerkolbens 15 nicht in Überdeckung mit einer der radialen Bohrungen 39 oder 39' der Steuerhülse 16 steht. Aur Grund der gleichgerichteten Schließcharakteristik ist ebenfalls die zweite verstellbare Lastsignaldrossel 27 geschlossen, da die Schlitze 35 nicht mit den Bohrungen 36 oder 36' in Verbindung sind. Dagegen sind die Bohrungen 32 der Steuerhülse 16 mit den Schlitzen 33 des Steuerkolbens 15 in Überdeckung, so daß die erste verstellbare Lastsignaldrossel 25 geöffnet ist.
Das von der Versorgungspumpe 2 bereitgestellte Öl baut in der Zulaufleitung 6 vor der Lenkeinrichtung 7 einen Druck auf, der sich einerseits als Drucksignal auf die nichtfederbelastete Seite des Stromteilventiles 3 fortpflanzt. Andererseits zweigt von gleicher Stelle der Zulaufleitung 6 ein Lastsignalstrom ab, der zur federbelasteten Seite des Stromteilventiles 3 und zum Lastsignalanschluß 13 der Lenkeinrichtung 7 geleitet wird. Über den Strömungspfad 22 und über die geöffnete verstellbare Lastsignaldrossel 25 im ersten Pfad 23 gelangt das Öl auf kurzem Weg in den zum Tank 1 führenden Ablaufanschluß 12.

Im Strömungspfad 22 und damit an der federbelasteten Seite des Stromteilventiles 3 stellt sich somit ein gegenüber dem anderseitigen Drucksignal ein geringeres Druckniveau ein. Diese Druckverhältnisse am Stromteilventil 3 veranlassen eine Verschiebung des Regelschiebers im Stromteilventil 3 in die Stellung, die den gesamten Ölstrom über das Stromteilventil 3 abzüglich des zum Lastsignalanschluß 13 fließenden Lastsignalstromes zur Arbeitshydraulik 5 gewährleistet.

Bei Auslenkung des Steuerkolbens 15, zum Beispiel nach rechts, bei kleiner Drehzahl kommen die Schlitze 38 und die Bohrungen 39 in Überdeckung, die verstellbaren Eingangsdrossel 20 öffnet. Ebenfalls öffnet die zweite verstellbare Lastsignaldrossel 27 durch die Überdeckung der Schlitze 35 und der Bohrungen 36. Dagegen befinden sich die Bohrungen 32 und die Schlitze 33 in der Schließbewegung, aber noch in Überdeckung. Somit ist auch die erste verstellbare Lastsignaldrossel 25 in Offenstellung.
Das von der Versorgungspumpe 2 bereitgestellte Öl gelangt über das Stromteilventil 3 durch die Zulaufleitung 6 zum Zulaufanschluß 9 und von dort über die geöffnete verstellbare Eingangsdrossel 20 zur Verdrängereinheit 17. Hier wird das Öl dosiert und dem Lenkzylinder 8 bereitgestellt. Gleichzeitig fließt ein Lastsignalstrom von der Zulaufleitung 6 zum Lastsignalanschluß 13. Von dort gelangt ein Teilstrom über die erste verstellbare Lastsignaldrossel 25 im ersten Pfad 23 in den Tank 1 und über die Drossel 26 und die zweite verstellbare Lastsignaldrossel 27 im zweiten Pfad 24 in den zur verdrängereinheit 17 führenden Hauptstrom.

Die so entstandenden Druckverhältnisse am Stromteilventil 3 gewährleisten eine Position des Regelschiebers, der den von der Versorgungspumpe 2 bereitgestellten Ölstrom aufteilt. Die von der Lenkeinrichtung 7 nicht benötigte Ölmenge wird der Arbeitshydraulik 5 zur Verfügung gestellt.

Bei voller Auslenkung des Steuerventils 14, z.B. nach rechts sind die verstellbare Eingangsdrossel 20 und die zweite verstellbare lastsignaldrossel 27 voll geöffnet und die erste verstellbare Lastsignaldrossel 25 ganz geschlossen. Der vom Hauptstrom abgezweigte Lastsignalstrom wird diesem innerhalb der Lenkeinrichtung 7 über die Drossel 26 und die zweite verstellbare Lastsignaldrossel 27 wieder zugeführt. Dabei entsteht ein vorherbestimmbarer relativ hoher Staudruck vor der Drossel 26, der als verstärktes Lastsignal auf die federbelastete Seite des Stromteilventiles 3 einwirkt. Dieses gegenüber einer Schaltung ohne Drossel 26 erhöhte Lastsignal braucht nur von einer Feder mit geringerer Steife unterstützt zu werden.
Bei einer verstellbaren Ausführung der Drossel 26 wäre der Durchflußquerschnitt bei voller Auslenkung des Steuerkolbens 15 am kleinsten und damit der Druck des Lastsignals am größten. Das Druckmedium des Lastsignales wird somit drehzahlabhängig beeinflußt.

## Patentansprüche

1. Hydraulische Lenkeinrichtung mit Lastsignal, bestehend aus einer Verdrängereinheit (17) und einer Steuereinheit (14) mit einem inneren Steuerkolben (15) und einer äußeren Steuerhülse (16), die beide miteinander und mit der Verdrängereinheit (17) kommunizierende radiale und axiale Kanäle besitzen und die Kanäle
- eine Hauptleitung (6) zwischen einem Eingangsanschluß (9) und der Verdrängereinheit (17) bilden, in der eine verstellbare Eingangsdrossel (20) angeordnet ist und
- eine erste Nebenleitung von der Hauptleitung (6) stromabwärts der verstellbaren Eingangsdrossel (20) zum Rücklaufanschluß (12) bilden, in der eine verstellbare Lastsignaldrossel (25) angeordnet ist und
- eine zweite Nebenleitung von der Hauptleitung (6) stromaufwärts der verstellbaren Eingangsdrossel (20) und außerhalb der Lenkeinrichtung zum Lastsignalanschluß (13) bilden, die in die erste Nebenleitung mündet und diese in einen ersten Pfad (23) und einen zweiten Pfad (24) aufteilt,
- wobei im ersten Pfad (23) die erste verstellbare Lastsignaldrossel (25) und im zweiten Pfad (24) eine zweite verstellbare Lastsignaldrossel (27) angeordnet sind und
- die verstellbare Eingangsdrossel (20) und die erste verstellbare Lastsignaldrossel (25) eine entgegengerichtete Schließcharakteristik aufweisen und die zweite verstellbare Lastsignaldrossel (27) und die verstellbare Eingangsdrossel (20) eine gleichgerichtete Schließcharakteristik besitzen,
**dadurch gekennzeichnet**, daß im zweiten Pfad (24) in Reihe zur zweiten verstellbaren Lastsignaldrossel (27) eine offene Drossel (26) angeordnet ist.

2. Hydraulische Lenkeinrichtung nach Anspruch 1, **dadurch gekennzeichnet**, daß die Drossel (26) im zweiten Pfad (24) des Lastsignals als Konstantdrossel ausgeführt ist.

3. Hydraulische Lenkeinrichtung nach Anspruch 1, **dadurch gekennzeichnet**, daß die Drossel (26) durch ein oder mehrere radiale Bohrungen (34) in der Steuerhülse (16) gebildet werden, die in Verbindung mit einem Ringkanal (31) des Steuerkolbens (15) stehen.

4. Hydraulische Lenkeinrichtung nach Anspruch 1, **dadurch gekennzeichnet**, daß die Drossel (26) durch ein oder mehrere radiale Bohrungen (40) in der Steuerhülse (16) gebildet werden, die in Verbindung mit axialen Schlitzen (41) in begrenzter Länge stehen, wobei die Schlitze (41) mit dem Ringkanal (31) des Steuerkolbens (15) verbunden sind und die Querschritte der Bohrungen (40) und die der Schlitze (41) in der Neutralstellung sich in voller Überdeckung befinden, wobei bei maximaler Auslenkung ein vorherbestimmbarer Restöffnungsquerschnitt besteht.

5. Hydraulische Lenkeinrichtung nach Anspruch 1, **dadurch gekennzeichnet**, daß die zweite verstellbare Drossel (27) aus mehreren, gleichmäßig am Umfang verteilten Schlitzen (35) in begrenzter Länge im Steuerkolben (15) und radialen, gleichermaßen angeordneten radialen Bohrungen (36) einerseits oder (36') andererseits in der Steuerhülse (16) gebildet wird, wobei die Schlitze (35) einerseits mit dem Ringkanal (31) des Steuerkolbens (15) verbunden sind und sich andererseits in der Neutralstellung der Steuereinheit (14) mit den radialen Bohrungen (36) oder (36') in negativer Überdeckung befinden.

## Claims

1. Hydraulic steering gear with load signal, consisting of a displacer unit (17) and a control unit (14) with an inner control piston (15) and an outer control sleeve (16) which both possess radial and axial channels communicating with one another and with the displacer unit (17), and the channels
- form a main line (6) between an input connection (9) and the displacer unit (17), in which main line an adjustable input throttle (20) is arranged and
- form a first subsidiary line from the main line (6) downstream of the adjustable input throttle (20) to the return connection (12), in which first subsidiary line an adjustable load-signal throttle (25) is arranged and
- form a second subsidiary line from the main line (6) upstream of the adjustable input throttle (20) and outside the steering gear to the load-signal connection (13), said second subsidiary line leading into the first subsidiary line and dividing the latter into a first path (23) and a second path (24),
- whereby the first adjustable load-signal throttle (25) is arranged in the first path (23) and a second adjustable load-signal throttle (27) is arranged in the second path (24) and
- the adjustable input throttle (20) and the first adjustable load-signal throttle (25) exhibit closing characteristics having contrary directions and the second adjustable load-signal throttle (27) and the adjustable input throttle (20) possess closing characteristics having the same direction,
characterised in that an open throttle (26) is arranged in the second path (24) in series with the second adjustable load-signal throttle (27).

2. Hydraulic steering gear according to Claim 1, characterised in that the throttle (26) in the second path (24) of the load signal is constructed as a constant throttle.

3. Hydraulic steering gear according to Claim 1, characterised in that the throttle (26) is formed by one or more radial bores (34) in the control sleeve (16) that are linked to an annular channel (31) in the control piston (15).

4. Hydraulic steering gear according to Claim 1, characterised in that the throttle (26) is formed by one or more radial bores (40) in the control sleeve (16) that are linked to axial slots (41) of limited length, the slots (41) being connected to the annular channel (31) in the control piston (15) and the cross-sections of the bores (40) and those of the slots (41) fully overlapping in the neutral position, whereby at maximal deflection a residual opening cross-section exists that is capable of being determined in advance.

5. Hydraulic steering gear according to Claim 1, characterised in that the second adjustable throttle (27) is formed from several slots (35) of limited length in the control piston (15) which are evenly distributed on the periphery and from radial bores (36) on the one hand or (36') on the other hand arranged equally in the control sleeve (16), the slots (35) being on the one hand connected to the annular channel (31) in the control piston (15) and on the other hand situated in negative overlap with respect to the radial bores (36) or (36') in the neutral position of the control unit (14).

## Revendications

1. Système hydraulique de direction avec signal de charge, consistant en une unité de refoulement (17) et une unité de commande (14) avec un piston intérieur de commande (15) et un manchon extérieur de commande (16), qui possèdent tous les deux des canaux radiaux et axiaux, qui communiquent les uns avec les autres et avec l'unité de refoulement (17) - forment une conduite principale (6) entre un raccord d'entrée (9) et l'unité de refoulement (17), dans laquelle est disposé un étranglement réglable d'entrée (20) et
- forment une première conduite auxiliaire de la conduite principale (6) en aval de l'étranglement réglable d'entrée (20) vers le raccord de retour (12), conduite auxiliaire dans laquelle est disposé un étranglement réglable (25) de signal de charge et
- forment une deuxième conduite auxiliaire de la conduite principale (6) en amont de l'étranglement réglable d'entrée (20) et en dehors du système de direction vers le raccord du signal de charge (13), deuxième conduite auxiliaire qui débouche dans la première conduite auxiliaire et divise celle-ci en un premier trajet (23) et un deuxième trajet (24),
- le premier étranglement réglable de signal de charge (25) étant disposé dans le premier trajet (23) et un deuxième étranglement réglable de signal de charge (27) étant disposé dans le second trajet (24), et
- l'étranglement réglable d'entrée (20) et le premier étranglement réglable de signal de charge (25) présentant une caractéristique de fermeture en sens opposé et le deuxième étranglement réglable de signal de charge (27) et l'étranglement réglable (20) possédant une caractéristique de fermeture de même sens,
caractérisé en ce que
dans le deuxième trajet (24) on dispose en série avec le deuxième étranglement réglable de signal de charge (27) un étranglement ouvert (26).

2. Système hydraulique de direction, selon la revendication 1,
caractérisé en ce que
l'étranglement (26) est réalisé dans le deuxième trajet (24) du signal de charge sous la forme d'un étranglement constant.

3. Système hydraulique de direction, selon la revendication 1,
caractérisé en ce que
les étranglements (26) sont formés par un ou plusieurs alésages radiaux (34) dans le manchon de commande (16), alésages qui sont en liaison avec un canal annulaire (31) du piston de commande (15).

4. Système hydraulique de direction, selon la revendication 1,
caractérisé en ce que
les étranglements (26) sont formés par un ou plusieurs alésages radiaux (40) dans le manchon de commande (16), étranglements (26), qui sont en liaison avec des fentes axiales (41) de longueur limitée, les fentes (41) étant reliées au canal annulaire (31) du piston de commande (15) et les sections transversales des alésages (40) et celles des fentes (41) se trouvant dans la position neutre en complet recouvrement, une section transversale d'ouverture résiduelle, qui peut être déterminée au préalable, existant lors de l'extension maximale.

5. Système hydraulique de direction, selon la revendication 1,
caractérisé en ce que
le deuxième étranglement réglable (27) est formé de plusieurs fentes (35), qui sont réparties régulièrement sur le pourtour de longueur limitée, dans le piston de commande (15), et d'alésages radiaux, disposés régulièrement, (36) d'une part ou (36') d'autre part, dans le piston (16) les fentes (35) étant reliées d'une part au canal annulaire (31) du piston de commande (15) et se trouvant d'autre part, quand l'unité de commande (14) est en position neutre, en recouvrement négatif avec les alésages radiaux (36) ou (36').
